# EUROPEAN PATENT SPECIFICATION

(11) **EP 1 911 024 B1**
(45) Date of publication and mention of the grant of the patent: **17.12.2008**
(21) Application number: 06780029.2
(22) Date of filing: 11.07.2006
(51) Int. Cl.: G11B 7/12

(54) **METHOD OF CLEANING A REFRACTIVE ELEMENT AND OPTICAL SCANNING APPARATUS FOR NEAR-FIELD OPTICAL SYSTEMS**
VERFAHREN ZUR REINIGUNG EINES REFRAKTIVEN ELEMENTS UND OPTISCHE SCANVORRICHTUNG FÜR OPTISCHE NAHFELDSYSTEME
PROCEDE DE NETTOYAGE D'ELEMENT DE REFRACTION ET APPAREIL DE BALAYAGE OPTIQUE POUR SYSTEMES OPTIQUES EN CHAMP PROCHE

(30) Priority: 20.07.2005 EP 05106634
(43) Date of publication of application: 16.04.2008
(73) Proprietor: Koninklijke Philips Electronics N.V., 5621 BA Eindhoven (NL)
(72) Inventor: VERSCHUREN, Coen, A., NL-5656 AA Eindhoven (NL)
(74) Representative: Uittenbogaard, Frank
(86) International application number: PCT/IB2006/052337
(87) International publication number: WO 2007/010437

(56) References cited:
- WO-A-00/67252
- JP-A- 7 192 290
- JP-A- 2002 329 341
- US-A- 5 321 549
- US-A1- 2002 085 473

## Description

### FIELD OF THE INVENTION

The present invention relates generally to a method cleaning a refractive element of an optical scanning apparatus of the near field type. The present invention also relates to an optical scanning apparatus of the near field type.

### BACKGROUND OF THE INVENTION

An optical scanning apparatus scans an optical disc by means of a radiation beam focused in a small spot onto the optical disc. By scanning an optical disc it is meant reading from and/or writing on an information layer in or on an optical disc. The maximum data density that can be read and/or recorded on an optical disc inversely scales with the size of the radiation spot that is focused onto the optical disc. The smaller the spot focused onto the disc, the larger the data density that can be recorded on the optical disc. The afore-mentioned spot size in turn is determined by the ratio of the wavelength λ of the scanning optical beam generated by the optical radiation source, for example a laser, and the numerical aperture (NA) of the focusing lens, which, can also be referred to as objective lens.

It is known in the art that achieving numerical apertures (NA) exceeding unity requires a so-called 'near-field' configuration, wherein a refractive element of the optical scanning apparatus is placed between the objective lens and the optical disc such that the refractive element is spaced from an exit surface of the optical disc at distances much less than one half of a wavelength, in practice the distance being smaller than a few tens of nanometers.

Known designs of optical scanning apparatuses that allows fulfilling the afore-mentioned distance requirements when reading or writing from/onto the optical disc are systems making use of sliders, analogous to magnetic recording systems and active feedback systems making use of actuators.

For both slider and actuator designs a technical challenge is to maintain an exit surface of the refractive element contaminant and dust free. Such contaminants or dust adhering to the surface in the path of the radiation can adversely affect the optical signal or the ability of the optical scanning apparatus to control the distance to the surface of the optical disc accurately, leading to degradation in performance or, in extreme cases, to malfunction of the optical scanning apparatus.

US Patent no 6,625,110 describes a method suitable for preventing dust accumulation in a slider based near-field optical head. It describes the use of an ultrasonic oscillator attached to the suspension arm of the slider, the decontamination of the lens taking place by resonating the slider. US Patent no 6,625,110 also discloses the use of dust collection electrode on the slider and mechanical cleaning of the optical head by means of a cleaner unit.

JP 07 192290 A, which is used for the two-part form delimitation of the independent claims, discloses cleaning pads with tapered surfaces mounted on the surface of a cleaning disk for cleaning the objective lens of optical pick-up. WO00/67252 describes a lens cleaning method for a near field optical scanning apparatus, bringing a cleaning pad into mechanical contact with the lens and cleaning the lens by moving the pad relative to the lens surface. Documents US-A-5 321 549, D4 JP 2002 329341 disclose cleaning brushes which are mounted rotatably on an axis parallel to the optical exit face of the refractive element.

### SUMMARY OF THE INVENTION

It is an object of the invention to provide a cleaning method highly suitable for an active feedback (actuator based) optical scanning systems of the near field type. This object is achieved by a method according to the invention characterized as recited in claim 1. This is based on the insight that the sensitivity to dust and contaminants are different and consequently the objective problem is different for actuator based optical scanning systems compared to slider systems. A slider system relies on having a large air-bearing surface with positive and negative pressure points to build up a hydrodynamic air pressure on which the slider floats. Consequently, slider systems are very sensitive to larger dust particles that if accumulated in any of the pressure points disturb the airflow, reduce the hydrodynamic air pressure and may lead to the slider colliding with the disc. The thin leaf spring supporting the slider generally does not survive such a collision. In contrast, we found that actuator based optical scanning systems are not affected by larger dust particles, as the support hinges of the actuator are much more robust, surviving collisions with the disc. However, we have found that such systems are sensitive to smaller size contaminants, for example organic material from fingerprints, accumulating preferentially at the edges of the refractive element. By studying optical microscope photographs of a solid immersion lens (SIL) use in an actuator based optical scanning system before usage and after a prolonged usage, we be observed that contaminants accumulate preferably at the edges of the lens, negatively affecting the transmission of radiation through the element In view of the small diameter of the exit pupil and of the small characteristic size of contaminants, known cleaning methods used with sliders as mechanical cleaning by means of brushing and/or ultrasonic vibration are not suitable for actuator based optical scanning systems. The cleaning efficiency is improved by a method according to claim 1, comprising bringing the refractive element to be cleaned in contact to a cleaning pad so that contact is made along a contact edge of the refractive element, as it allows cleaning preferentially the edges of the refractive element.

In an advantageous embodiment, the direction of the relative movement along the cleaning axis is chosen such that the contact edge trails the refractive element. Such measure has the advantage that dirt is pushed away from the surface of the refractive element, eliminating the risk of contaminating the center of the refractive element.

An improved embodiment is obtained by the measures of claim 3, as the lens tilting mechanisms available in a state-of-art actuator-based near-field optical scanning apparatuses can be used to advantage for rotating the refractive element. Preferably, the rotation axis is chosen parallel to the contact edge. Moreover, it is preferred that the contact edge is chosen such that it corresponds to a tangential direction of movement of the refractive element relative to an optical disc when scanning the optical disc. We experimentally found that contaminants accumulate preferentially at the trailing edge of the refractive element with respect to the scanning direction, consequently the said measures allows an efficient cleaning of those areas of the refractive element most prone to contaminant accumulation.

In order to improve the cleaning efficiency, preferably multiple cleaning steps are performed. Preferably, the cleaning method includes a second rotation step, comprising rotating the refractive element around the rotation axis in an opposite direction to a rotation direction in the first rotation step and a second cleaning step, comprising at least a relative movement of the cleaning pad relative to the refractive element in a cleaning direction. The said method allows efficient cleaning of both the trailing edge and the leading edge areas of the refractive element with respect to the scanning direction of the optical disc, said areas being the most prone to contaminant accumulation.

An improved embodiment is obtained by the measures of claim 4. If the first cleaning step further comprises a transversal relative movement along an axis parallel to the contact edge, it has the advantage that, when a sequence comprising cleaning steps in opposite cleaning directions are being executed, a fresh surface of the cleaning pad is provided during executing each cleaning step, therefore avoiding the risk of re-contaminating the optical exit surface.

An improved embodiment is obtained by the measures of claim 8. If multiple cleaning sequences are executed, preferably the rotation angle of the refractive element corresponding to the first cleaning sequence is large, preferably the largest. Such measure ensures that the edges of the refractive element are cleaning without running the risk of trapping contaminants between the optical exit surface of the refractive element and the surface of the cleaning pad. After the first cleaning sequence, the rotation angle can be reduced for the successive cleaning sequences, preferably the last cleaning sequence including cleaning of the optical exit surface of the refractive element itself.

An improved embodiment is obtained by the measures of claim 11. Repeating the cleaning sequence while varying the direction of the rotation axis corresponding to a given cleaning sequence has the advantage that the complete edge of the optical exit surface of the refractive element can be cleaned, not only the trailing and leading edges.

The invention also relates to an optical scanning apparatus of the near field type for scanning an optical disc according to claim 15. An optical scanning apparatus according to the invention further comprises a cleaning pad, first mechanical movement means for bringing into mechanical contact the refractive element and the cleaning pad such that an optical exit surface of the refractive element is non-parallel to a surface of the cleaning pad, the refractive element contacting the cleaning pad along a contact edge and second mechanical movement means for relatively moving the cleaning pad relative to the refractive element at least along cleaning axis, wherein the cleaning axis is in the plane of the cleaning pad and substantially perpendicular to the contact edge. An optical scanning apparatus according to the invention is able to clean the optical exit surface of the refractive element. In a preferred embodiment the first mechanical movement means an actuator used for providing lens tilt and focus control while scanning an optical disc. Preferably, rotation angle is between 1 to 100 mrad and the refractive element is a solid immersion lens (SIL).

These and other aspects of the invention are apparent from and will be explained with reference to the embodiments described hereinafter. In the following, it is understood that the term refractive element encompasses many optical elements, which may include a SIL lens for near-field systems, and that the use of the term SIL lens in the description for purposes of explanation does not limit the application of the invention to only a SIL lens.

### BRIEF DESCRIPTION OF THE DRAWINGS

The features and advantages of the invention will be appreciated upon reference to the following drawings, in which:
Fig. 1 illustrates schematically an optical scanning apparatus wherein the invention may be practiced;
Fig. 2 illustrates schematically an optical pick-up unit of the optical scanning apparatus;
Fig. 3 illustrates schematically a solid immersion lens;
Fig. 4 illustrates a first embodiment of a method of cleaning a refractive element according to the invention;
Fig. 5 illustrates a second embodiment of a method of cleaning a refractive element according to the invention;
Fig. 6 illustrates a third embodiment of a method of cleaning a refractive element according to the invention.

### DETAILED DESCRIPTION OF THE PREFERRED EMBODIMENTS

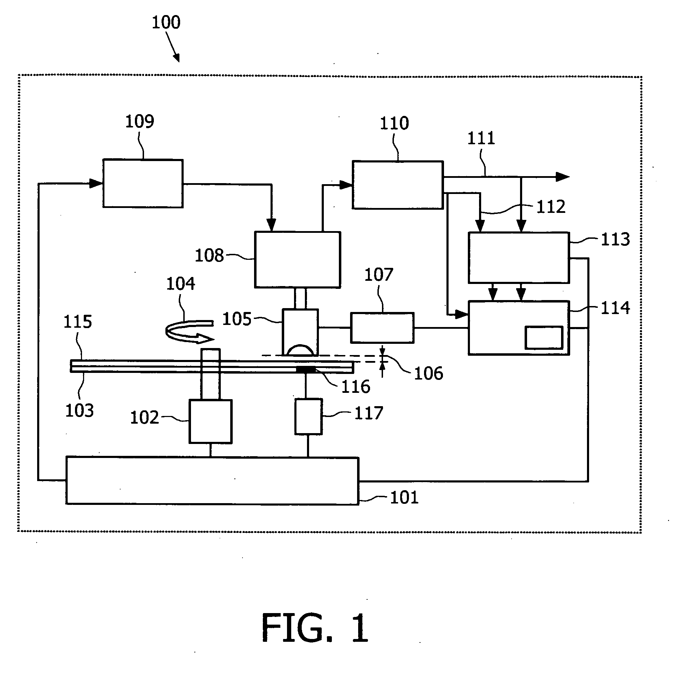

Fig. 1 illustrates schematically an optical scanning apparatus of the near field type wherein the invention may be practiced. A detailed description of such apparatus can be found in Proceedings of SPIE (Optical Data Storage 2004), ed. B.V.K. Vijaya Kumar, Vol. 5380, pp 209-223.

The apparatus 100 forms part of a near-field optical system. The device comprises a control unit 10 which is connected to a motor control 102 upon which rests a chuck 103 where an optical disc 115 can be placed. The optical disc 115 can be caused to rotate 104 during reading and writing operations of the optical system. Above the optical disc 115, the refractive element, for example a solid immersion lens (SIL), of the near-field system is contained in the head assembly 105. The head assembly 105 is positioned above the optical disc 115 at a specific distance 106 by the servo unit 107. The radiation beam incident on the optical disc 115 originates from the Front-end unit 108, which contains laser, optics, detectors etc, and which receives operational instructions from the control unit 101 via a unit 109 where inputs are formatted and modulated.

To allow control of the specific distance 106 between the optical disc 115 and the head assembly 105, also known as the air gap, by means of a mechanical actuator at such small distances, a suitable control signal is required as input for the gap servo system. It is known that a suitable control signal can be obtained from a reflected optical radiation beam with a polarization state, which is, for example, perpendicular to that of the scanning optical radiation beam that is focused on the optical disc. A significant fraction of the optical radiation beam becomes elliptically polarized after reflection at the SIL-air- optical disc interfaces. This effect can create the well-known "Maltese cross" when the reflected beam is observed through a polarizer. The control signal is generated by integrating all the light of this "Maltese cross" using polarizing optics and a radiation detector, for example a single photo detector. The value of the photo detector is close to zero for the distance 106 being zero (mechanical contact) and increases with increasing the distance 106 and levels off at a maximum value when the distance 106 is approximately a tenth of the wavelength of the optical beam. The control signal is known as the Gap Error Signal (GES) and, together with the corresponding servo methods, has been described and demonstrated in the reference cited above and also in Jpn. J. Appl. Phys. Vol. 42 (2003) pp2719-2724, Part 1, No. 5A, May 2003 and in Technical Digest ISOM/ODS 2002, Hawaii, 7-11 July 2002 ISBN 0-7803-7379-0.

Output from the Front-end unit 108 is fed into the Signal processing unit 110. This output contains, among other things, readout data and gap error signal (GES) distance measurements. Readout data 111 is directed towards a separate subsystem. The GES signal 112 is fed into a threshold unit 113. This threshold unit comprises one or more threshold values which have been predetermined and programmed into the unit. In addition the programming contains appropriate reactions, which must be implemented if any of the measured distances are outside the threshold values. Comparison between measured distances and thresholds takes place and the appropriate reaction is chosen if necessary. This information is then fed into the Air gap control unit 114 which acts to implement the chosen reaction by controlling the servo unit 107, which in turn controls the head 105 containing the SIL lens.

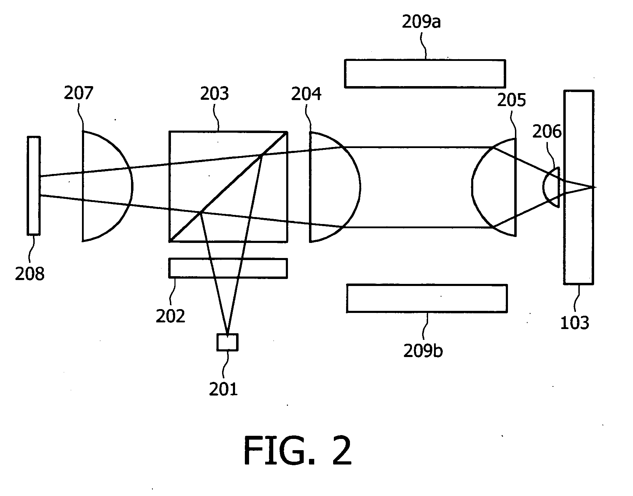

Further details of an optical pick-up unit (OPU) comprising the head assembly 105 and of the Front-end unit 108 will be discussed with reference to Fig. 2. This is meant as an illustrative example and several other embodiments are known in the art. The radiation beam, for example a monochromatic laser beam, is generated by a laser diode 201 and it passes through a grating 202, which allows generating a three-beam system comprising a main beam and two satellite spots. The radiation beam further passes through a beamsplitter 303, a collimator lens 204. Finally, the radiation beam is focused into a spot onto an information layer provided onto the optical disc 106 by means of the objective lens 205 and an exit the refractive element 206, for example a solid immersion lens (SIL). The information layer onto the optical disc may be covered by a cover layer for mechanical protection against scratches. Part of the radiation beam that is reflected by the information layer in optical disc passes is transmitted through the beamsplitter 203 towards a servo lens 207 and a detector 208. The mechanical actuator system 209a and 209b is responsibly for adjusting the position of the solid immersion lens (SIL) 206 and/or of the objective lens 205 with respect to the optical disc.

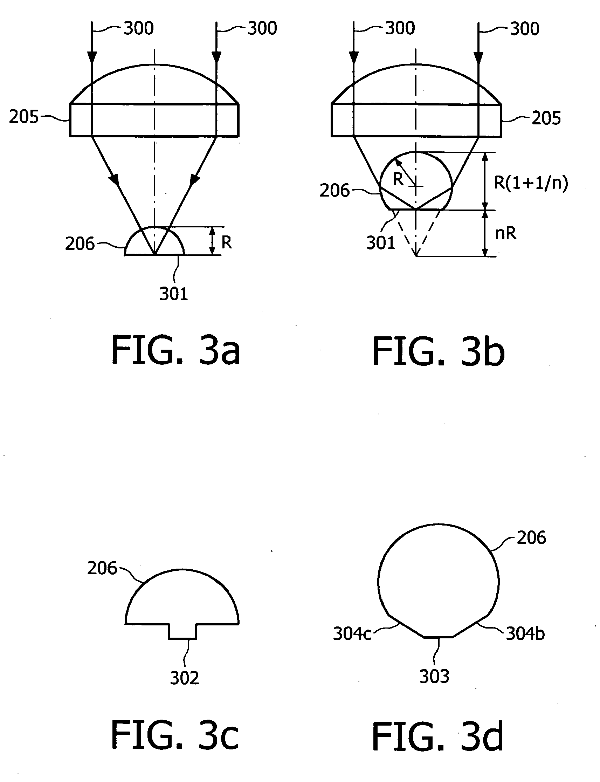

Further details of the solid immersion lens (SIL) 206 will be discussed with reference to Fig. 3. The numerical aperture (NA) of a lens can exceed unity if the light is focused in a high index medium without refraction at the air-medium interface, for example by focusing in the center of a hemispherical solid immersion lens (SIL) 206 as shown in Fig. 3a. In this case, the effective NA is NA_{eff} = n NA₀, wherein n is the refractive index of the hemispherical solid immersion lens (SIL) 206 and NA₀ is the NA in air of the objective lens 205 according to Fig. 3a).

In order to further increase the NA, it is known in the art to use a super-hemispherical solid immersion lens as shown in Fig. 3b). A super-hemispherical lens refracts the optical beam towards the optical axis. Now, the effective NA is NA_{eff}=n² NA₀. The optical thickness of the super-hemispherical solid immersion lens is R(1+1/n), where n is the refractive index of the lens material and R is the radius of the semi-spherical portion of the solid immersion lens (SIL) 206.

It is important to note that an effective NA_{eff} larger than unity is only present within an extremely short distance from the optical exit face 301 of the solid immersion lens were an evanescent wave exists. The distance is typically smaller than one tenth of the wavelength of the radiation. The afore-mentioned distance is also called the near-field. This short near-field means that during writing or reading an optical record carrier the distance between the solid immersion lens and the record carrier must at all times be smaller than a few tens of nanometers. This is because at least a part of the scanning optical beam incident on the optical exit face 301 of the SIL is totally reflected at the lens-air-interface wherein the totally reflected part of the optical beam evanesces just a very small distance into the optically thinner medium.

Designs known in the art for the optical exit face 301 of a SIL lens 206 are further illustrated with reference to Figs 3c and 3d. In one embodiment of the optical exit face (301) of a SIL lens of the hemispherical type, the optical exit face (301) comprises a mesa etch, the substantially flat surface of the mesa etch of the optical exit face (301) defining the optical exit surface (the exit pupil) of the SIL lens 206. The diameter of the exit pupil is in the order of 20-100 microns. Such design of the optical exit face (301), in which the diameter of the exit pupil being maintained at small distances from the optical disc while scanning the optical disc is much smaller that the diameter of the SIL lens has the advantage that it obviates the problem of non-uniform disc height. In an embodiment of the optical exit face 301 of a SIL lens of the super-hemispherical type (Fig 3d), optical exit face 301 comprises a planar optical exit surface 303 defining the exit pupil and two surfaces 304b and 304a under a small angle with respect to optical exit surface 303. Such a design again provides the advantage that obviates the problem of non-uniform disc height.

Because the diameter of the optical exit surface (the exit pupil) (302,303) of such a SIL lens 206 is much smaller that that of conventional optical scanning apparatuses and the distance to the surface of the optical disc while scanning said disc is very small, the problems faced in dealing with dust and contaminants are different from conventional optical scanning apparatuses. Firstly, we found that actuator based optical scanning systems are not affected by larger dust particles, as the support hinges of the actuator are much more robust, surviving collisions with the disc. Secondly, by studying optical microscope photographs of a solid immersion lens (SIL) use in an actuator based optical scanning system before usage and after a prolonged usage, we be observed that contaminants accumulate preferably at the edges of the lens, negatively affecting the transmission of radiation through the element.

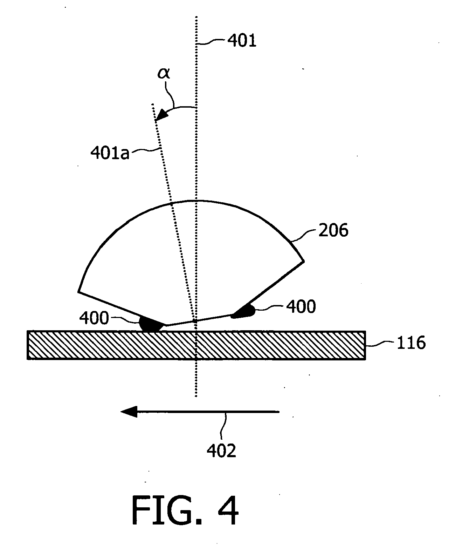

Fig. 4 illustrates a first embodiment of a method of cleaning an optical exit surface (302,303) of a refractive element, in particular the SIL lens 206, according to the invention. While scanning an optical disc 115, the very small distance in the order of 20-50 nm between the optical disc 115 and the SIL lens 206 can lead to contamination of the SIL lens 206. This can be due to contamination present on the optical disc 115, residue from small contact/impact events, etc. Although said contamination may not give rise to immediate problems, a large amount of residue increases the chance of contamination or damage to the optical exit surface (302,303) of the SIL lens 206 and, should therefore be avoided. As mentioned, we observed that contamination mainly collects around the edge of the optical exit surface (302,303) of the SIL lens 206. Such contaminant accumulation at the edges of the optical exit surface (302,303) is illustrated in fig. 4 by means of contamination material 400. Consequently, attempting to clean the optical exit surface (302,303) according to known methods, e.g. by brushing the optical exit surface (302,303) parallel to the surface of a cleaning pad, proved ineffective. In addition, parallel brushing the optical exit surface (302,303) may drag contamination material 400 over the optical exit surface (302,303), thus increasing the possibility for scratches.

In a method according to the invention, in a contacting step, either the SIL lens 206 or the cleaning pad 116 are rotated so that the optical exit surface (302,303) is non-parallel to the surface of the cleaning pad 116 and the two brought into mechanical contact. This is equivalent to having the optical axis 401 of the SIL lens 206 in a direction 401a non-perpendicular to the surface of the cleaning pad. The result of contacting step is that the optical exit surface (302,303) of the SIL lens 206 contacts the cleaning pad along a contact edge. The contacting step is followed by a cleaning step, in which the contact pad 116 is displaced relative to the SIL lens 206 in a cleaning direction 402. In this way, when the cleaning pad 116 is displaced with respect to the SIL lens 206, the contamination material 400 is more effectively removed from the edges, while reducing the risk that contamination material 400 is dragged over the optical exit surface (302,303). Moreover, in an advantageous embodiment, the rotation direction of the optical exit surface (302,303) of the SIL lens 206 is chosen such that the contamination material 400 is removed away from the SIL lens 206 in the cleaning step (as indicated by the arrow 402 in Fig. 4, indicating the displacement direction of the contamination material 400) Thus, it is possible to minimize the chance of redeposition or dragging of contamination on the optical exit surface (302,303) of the SIL lens 206.

In an advantageous embodiment, the cleaning direction is chosen to be along a tangential direction of movement of the SIL lens 206 relative to the optical disc 115 when scanning the optical disc 115. We experimentally found that contaminants accumulate preferentially at the trailing edge of the refractive element with respect to the scanning direction, consequently the said measures allows an efficient cleaning of those areas of the refractive element most prone to contaminant accumulation.

Several equivalent hardware embodiments of the described method can be easily envisioned. In a preferred embodiment, the relative rotation of the SIL lens 206 with respect to the cleaning pad 116 is obtained by making use of a lens tilting mechanism. Such lens tilting mechanisms are already available in state of art optical pick-up units (OPU) for e.g. lens-to-disc alignment purposes. Such lens tilting mechanisms may be either one that allows tilting the whole optical pick-up unit (OPU), i.e. the entire light path as illustrated in figure 2 or, alternatively, a mechanism known in the art as a 3D or 4D actuator. Such 3D or 4D actuators not only performs focusing and tracking movement (translation) of the SIL lens 206 (2D movement), but it also allows tilting the SIL lens 206 along one (3D) or two perpendicular axes (4D). Such 3D or 4D actuators are currently being used and/or developed for example for digital versatile disc DVD and/or Blue-Ray (BD) players/recorders. In the context of the present invention, "performs focusing and tracking movement (translation) of the SIL lens 206" includes adjusting the SIL lens 206 only or adjusting the assembly consisting of the SIL lens 206 and the focusing lens 205.

Instead of using a 3D or 4D actuator for rotating SIL lens 206 or using a mechanism for rotation the whole OPU, it is also possible to implement a rotation mechanism for the cleaning pad. Fast rotation is not required.

In an embodiment, a (movable) cleaning pad 116 is provided inside the optical scanning apparatus 100. The cleaning pad 116 may be placed on the chuck 103 preferably just outside the disc area. The cleaning pad may be moved with respect to the SIL lens 206 by means of mechanical movement means 117 (e.g. motor or actuator) that is controlled by the control unit 101. Such mechanical movement means 117 may be arrange to provide the displacement of the cleaning pad 116 in either one or two directions. Moreover, the mechanical movement means 117 may be further enabled to rotate the cleaning pad 116 with respect to the SIL lens 206 and or to bring the cleaning pad into mechanical contact with the SIL lens 206.

Therefore the relative rotation of the SIL lens 206 with respect to the cleaning pad 116 in the contacting step and the approach to contact of the SIL lens 206 and the cleaning pad 116 can be performed either by the actuator system (209a, 209b) of the OPU or by the mechanical movement means 117. In view of already being present in an optical scanning apparatus, the use of the actuator system (209a, 209b) of the OPU is preferred. In the said embodiment, preferably during the cleaning procedure no closed loop control of the distance 106, such as during read/write operation, is provided. Instead, the cleaning pad 116 and SIL lens 206 are gently pushed against each other. Since in a start of art OPU, the SIL lens 206 is mounted in a wire-spring holder with a stroke of a few 100 micrometers, mechanical tolerances are sufficient to move the lens over cleaning pad 116 and then bring them into contact. The maximum contact force is determined by the spring constants of the actuator, and/or by the elasticity of the backing material of the cleaning pad (e.g. soft rubber or foam). In this way, contact forces are always within safe limits.

In an alternative embodiment, it is possible to provide a cleaning pad 116 on each optical disc 115, e.g. by means of a small cleaning strip provided near the inner and/or outer radius of the optical disc 115. This has the disadvantage that movement control of the cleaning pad is limited to the movement control of the optical disc 115, which usually only rotates in one direction only.

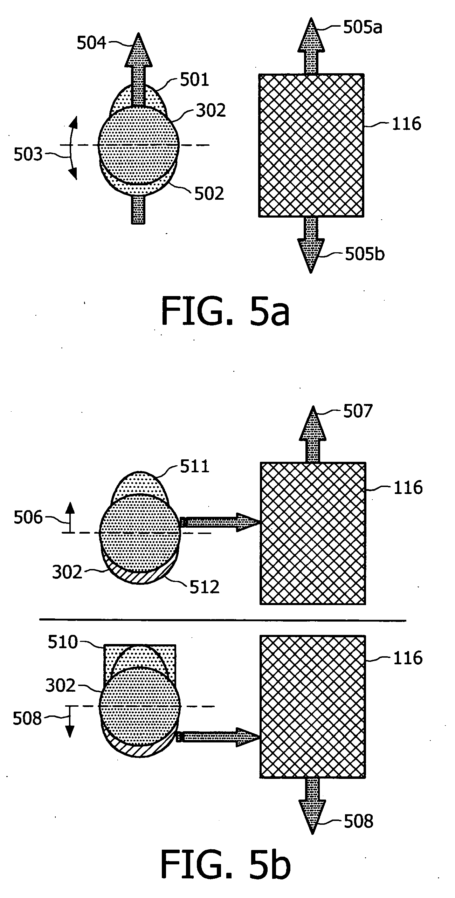

Fig. 5 illustrates a second embodiment of a method of cleaning an optical exit surface (302,303) of a SIL lens 206 according to the invention. Accordingly, a cleaning sequence of corresponding rotation and cleaning steps are performed.

In figure 5a and b, a top view of the optical exit surface (302,303) of a SIL lens 206 and of the cleaning pad 116 are shown. Arrow 503 indicates the possible rotation directions of the SIL lens 206; arrows 505a and 505b indicate the possible movement directions of the cleaning pad 116. Numerals 501 and 501 indicate two edges of the optical exit surface (302,303) of a SIL lens 206 that are being cleaned according to the method. In a first sequence of steps, as illustrated in the top view of Fig 5b, the SIL lens 206 is rotated in a direction 506 so that edge 511 is a contact edge and edge 512 does not contact the cleaning pad 116. In the first cleaning step, the cleaning pad 116 is moved accordingly, as indicated by arrow 507. In a second sequence of steps, as illustrated in the bottom view of Fig 5b, the SIL lens 206 is rotated in the opposite direction 508 so that now the opposite edge 508 is a contact edge and edge 510 does not contact the cleaning pad 116. In the second cleaning step, the cleaning pad 116 is moved accordingly, in the opposite direction 508 compared to the movement direction in the first sequence. The first and the second sequence of steps may be repeated as needed.

Analogous to the first embodiment of the method, it is advantageous to choose the cleaning direction along a tangential direction of movement of the SIL lens 206 relative to the optical disc 115 when scanning the optical disc 115.

Without adding hardware complexity, in an advantageous embodiment making use of the OPU actuators (209a, 209b) for moving the SIL lens 206, improved cleaning is obtained by also making use the radial movement of the SIL lens 206 (see Fig. 5b). Such motion can be obtained by either using the tracking coils of the actuator or by using the linear sledge or rotational arm used for bringing the OPU to a desired radius. In a cleaning method according to the second embodiment, during the cleaning step, the SIL lens 206 is slowly moved perpendicular to the cleaning direction, preferably simultaneously with the cleaning motion. The advantage is that the chance for re-contamination is strongly reduced, since a fresh part of the cleaner is always used. Lateral movement of the SIL lens 206 during the cleaning step means that the movement direction is no longer parallel to the disc movement direction. To keep the advantage of moving contamination away from the SIL lens 206, the lateral movement velocity of the SIL lens 206 should preferably be within a factor 2-3 of the movement velocity of the cleaning pad 116.

In case of a continuous movement e.g. from left to right, the SIL lens 206 will follow a zigzag pattern over the cleaning pad 116. Alternatively, the lateral movement of the SIL lens 206 can be performed between the cleaning steps. Here, the SIL lens 206 will follow a rectangular wave type of pattern. The cleaning movement is again preferably in a direction parallel to movement direction of the SIL lens 206 when scanning an optical disc, while the rotation of the SIL lens 206 can be done before, during or after the lateral movement.

It should be noted that in an alternative embodiment, instead of combining the movement of the cleaning pad 116 with a lateral movement of the SIL lens 206, the mechanical movement means 117 can be arranged so that the cleaning pad 116 is enabled to move in both directions, while the SIL lens 206 remains fixed.

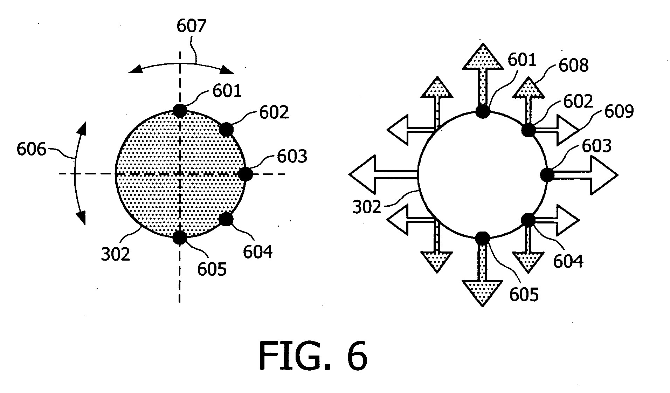

Fig. 6 illustrates a third embodiment of a method of cleaning a refractive element according to the invention;

The concepts as described hereinabove can be extended to cleaning the entire edge of optical exit surface (302,303) of the SIL lens 206, instead of only the (most important) leading and trailing edges. Preferably this is obtained by making use of a 4D actuator, allowing rotating of the SIL lens 206 in two perpendicular directions. Fig. 6 shows from a top view the circular edge of optical exit surface (302,303) of the SIL lens 206. The arrows 606 and 607 indicate the rotation direction available for rotation the SIL lens 206. The dashed axes indicate the possible movement directions of the cleaning pad 116 (for clarity, the cleaning pad 116 is not shown in Fig. 6). For example, in a cleaning method according to a third embodiment of the invention, the method starts by rotating the SIL lens 206 such that the edge of optical exit surface (302,303) is touching the cleaning pad 116 in point 601 as marked in Fig. 6. Synchronized to this rotation, in the subsequent cleaning step, the displacement velocity of the cleaning pad 116 and lateral movement velocity of the SIL lens 206 are adapted as indicated by the size of the arrows in Fig. 6b (right). Herein the filled arrows 608 indicate the velocity of the cleaning pad 116 with respect to the SIL lens 206 and the open arrows 609 indicate the velocity of the lateral movement of the SIL lens 206. The method continues by a sequence of rotation steps and corresponding cleaning steps for points 602, 603, 604 and 605. For example, when the SIL lens 206 is rotated such that the optical exit surface (302,303) contacts the cleaning pad 116 in point 603, only the SIL lens 206 is moving such that the cleaning pad 116 (as seen from the SIL lens 206) moves to the right. This results in contamination removal from point 603 away from the optical exit surface (302,303) of the SIL lens 206. For points 604, the lateral SIL lens 206 velocity is reduced and the cleaning pad is now moving down. For point 605, only the cleaning pad is moving, etc, etc. Choosing (as in this example) a maximum lateral movement velocity of the SIL lens 206 equal to the maximum movement velocity of the cleaning pad 116 results in a circular trace made by the SIL lens 206 on the cleaning pad 116, where the radius of the trace scales with the chosen velocity. In general, e.g. choosing unequal max. velocities, results in an ellipse-shaped trace, with the first embodiment as described in Fig. 4(no lateral lens movement) as a limiting case.

It should be noted that in an alternative embodiment, instead of combining the movement of the cleaning pad 116 with a lateral movement of the SIL lens 206, the mechanical movement means 117 can be arranged so that the cleaning pad 116 is enabled to move in both directions, while the SIL lens 206 remains fixed.

When cleaning, multiple cleaning sequences can be used (sequence = up-down, or one revolution) for a more thorough cleaning. It is advantageous to start the first sequence with a larger rotation angle, such that the height difference over the optical exit surface (302,303) of the SIL lens 206 is larger than the height of the structure of the cleaning cloth used in the cleaning pad 116 (hair, brush, fibers). This makes sure that edges of the optical exit surface (302,303) are cleaned first without running the risk of trapping contamination from the opposite edge of the optical exit surface (302,303) between the optical exit surface (302,303) and the cleaning pad 116. After this sequence, the rotation angle can be reduced for the successive sequence(s), for example to include cleaning of the optical exit surface (302,303) itself.

It should be noted that the above-mentioned embodiments are meant to illustrate rather than limit the invention. And that those skilled in the art will be able to design many alternative embodiments without departing from the scope of the appended claims.

## Claims

1. A method of cleaning an optical exit face (302, 303) of refractive element (206) of a near field optical scanning apparatus (100) for scanning an optical disc (115), the method comprising:
a contacting step, comprising bringing into mechanical contact the refractive element (206) and a cleaning pad (116) such that the optical exit face of the refractive element (206) is non-parallel to a surface of the cleaning pad, the refractive element contacting the contact surface of the cleaning pad along a contact edge;
- a first cleaning step, comprising at least a relative movement of the cleaning pad (116) relative to the refractive element (206) at least along cleaning axis, **characterized in that** the cleaning axis is in the plane of the contact surface of the cleaning pad and substantially perpendicular to the contact edge.

2. A cleaning method according to claim 1, **characterized by** choosing a direction of the relative movement along the cleaning axis such that the contact edge trails the refractive element.

3. A cleaning method according to claim 2, **characterized by** the method further comprising a first rotation step preceding the first cleaning step, the first rotation step comprising rotating the refractive element (206) around a rotation axis in the plane of the refractive element (206).

4. A cleaning method according to claim 3, **characterized by** the rotation axis being parallel to the contact edge.

5. A cleaning method according to claim 4, **characterized by** the first cleaning step further comprising a transversal relative movement along an axis parallel to the contact edge, preferably the relative movement along the cleaning axis and the transversal relative movement being executed simultaneously.

6. A cleaning method according to claims 3, 4 or 5, **characterized by** further comprising:
- a second rotation step, comprising rotating the refractive element (206) around the rotation axis in an opposite direction to a rotation direction in the first rotation step;
- a second cleaning step, comprising at least a relative movement of the cleaning pad (116) relative to the refractive element (206) at least in a cleaning direction, the cleaning direction being along the cleaning axis such that the contact edge trails the refractive element.

7. A cleaning method according to claim 6, **characterized by** repeating the sequence of steps of first rotation, first cleaning, second rotation, second cleaning.

8. A cleaning method according to claim 7, **characterized by** reducing rotation angle of rotating the refraction element after each sequence of steps of first rotation, first cleaning, second rotation, second cleaning.

9. A cleaning method according to claims 7 or 8, **characterized by** the cleaning step further comprising a relative movement in a direction parallel to the contact edge.

10. A cleaning method according to any of the preceding claims, **characterized by** the contact edge being chosen such that it corresponds to a tangential direction of movement of the refractive element (206) relative to an optical disc (115) when reading information from the optical disc.

11. A cleaning method according to claim 7, **characterized by** the rotation axis corresponding to a given sequence of steps of first rotation, first cleaning, second rotation, second cleaning being chosen different from the rotation axis of other sequences.

12. A cleaning method according to any of the preceding claims, **characterized by** the rotation of the refractive element (206) being performed by an actuator (209a, 209b) used for providing lens tilt and focus control while scanning an optical disc.

13. A cleaning method according to any of the preceding claims, **characterized by** the cleaning pad (116) having a cotton-based surface.

14. A cleaning method according to any of the preceding claims, **characterized by** the rotation angle being between 1 to 100 mrad.

15. A cleaning method according to any of the preceding claims, **characterized by** the refractive element being a solid immersion lens (SIL).

16. A near field optical scanning apparatus for scanning an optical disc comprising:
- a front-end unit (108) for generating a forward radiation beam and detecting a reflected radiation beam;
- an optical head (105), the optical head comprising a refractive element (206) for transmitting the forward radiation beam towards the optical disc (115) and transmitting the reflected radiation beam from the optical disc (115) towards the front-end unit (108);
- a cleaning pad (116);
- first mechanical movement means (209a, 209b) for bringing into mechanical contact the refractive element (206) and the cleaning pad (116) such that an optical exit surface of the refractive element is non-parallel to the contact surface of the cleaning pad, the refractive element contacting the contact surface of the cleaning pad along a contact edge;
- second mechanical movement means (117) for relatively moving the cleaning pad (116) relative to the refractive element (206) at least along cleaning axis, **characterized in that** the cleaning axis is in the plane of the contact surface of the cleaning pad (116) and substantially perpendicular to the contact edge.

17. A near field optical scanning apparatus according to claim 16, **characterized in that** the second mechanical movement means (117) are arranged to relatively move the cleaning pad along the cleaning axis in a direction chosen such that the contact edge trails the refractive element.

18. A near field optical scanning apparatus according to claim 17, **characterized in that** the first mechanical movement means (209a, 209b) are arranged to rotate the refractive element (206) around a rotation axis in a first direction in the plane of the refractive element (206).

19. A near field optical scanning apparatus according to claim 18, **characterized in that** the rotation axis is parallel to the contact edge.

20. A near field optical scanning apparatus according to claim 19, **characterized in that** the second mechanical movement means (117) are further arranged to transversally move the cleaning pad (116) along an axis parallel to the contact edge, the second mechanical movement means (117) preferably being arranged to executing the relative move along the cleaning axis and the transversal relative move simultaneously.

21. A near field optical scanning apparatus according to claims 18, 19 or 20, **characterized in that:**
- the first mechanical movement means (209a, 209b) are further arranged to rotating the refractive element (206) around the rotation axis in an opposite direction to the first direction; and
- the second mechanical movement means (117) are further arranged to move the cleaning pad (116) relative to the refractive element (206) at least in a cleaning direction, a cleaning direction, the cleaning direction being along the cleaning axis such that the contact edge trails the refractive element (206).

22. A near field optical scanning apparatus according to claim 21, **characterized in that** the first mechanical movement means (209a, 209b) and the second mechanical movement means (117), are further arranged to repeatedly execute a sequence of movements comprising rotating the refractive element (206) in the first rotation direction, moving the cleaning pad (116) along the cleaning direction, rotating the refractive element (206) in the opposite direction to the first rotation direction and moving the cleaning pad (116) along the cleaning direction.

23. A near field optical scanning apparatus according to claim 22, **characterized in that** the first mechanical movement means (209a, 209b) are further arranged to reducing a rotation angle of rotating the refraction element (206) after executing each sequence of movements.

24. A near field optical scanning apparatus according to claims 22 or 23, **characterized in that** the second mechanical movement means (117) are further arranged to move the cleaning pad (116) in a direction parallel to the contact edge.

25. A near field optical scanning apparatus according to any of the preceding claims, **characterized in that** the contact edge is chosen such that it corresponds to a tangential direction of movement of the refractive element (206) relative to an optical disc (115) when reading information from the optical disc (115).

26. A near field optical scanning apparatus according to claim 22, **characterized in that** the first mechanical movement means (209a, 209b) and the second mechanical movement means (117) are further arranged to executing a sequence of movements corresponding to at least two different rotation axes.

27. A near field optical scanning apparatus according to any of the preceding claims, **characterized in that** the first mechanical movement means (209a, 209b) is an actuator used for providing lens tilt and focus control while scanning an optical disc (115).

28. A near field optical scanning apparatus according to any of the preceding claims, **characterized in that** the cleaning pad has a cotton-based surface.

29. A near field optical scanning apparatus according to any of the preceding claims, **characterized in that** the rotation angle is between 1 to 100 mrad.

30. A near field optical scanning apparatus according to any of the preceding claims, **characterized in that** the refractive element (206) is a solid immersion lens (SIL).

31. A near field optical scanning apparatus for scanning an optical disc, the optical disc comprising a cleaning pad, comprising:
- a front-end unit for generating a forward radiation beam and detecting a reflected radiation beam;
- an optical head, the optical head comprising a refractive element for transmitting the forward radiation beam towards the optical disc and transmitting the reflected radiation beam from the optical disc towards the front-end unit;
- first mechanical movement means for bringing into mechanical contact the refractive element and a cleaning pad provided on the optical disc such that an optical exit surface of the refractive element is non-parallel to the contact surface of the cleaning pad, the refractive element contacting the contact surface of the cleaning pad along a contact edge;
- second mechanical movement means for relatively moving the cleaning pad provided onto the optical disc relative to the refractive element at least along cleaning axis, the apparatus being **characterized in that** the cleaning axis is in the plane of the contact surface of the cleaning pad and substantially perpendicular to the contact edge.

32. A near field optical scanning apparatus according to claim 31, **characterized in that** second mechanical movement means are disc rotation means.

33. An optical disc comprising a cleaning pad (116) or cooperating with a near field optical scanning apparatus according to claim 31 in performing a cleaning method according to claim 1.

34. An optical disc according to claim 33, **characterized in that** the cleaning pad (116) is a ring shaped cleaning strip provided in the inner area of the optical disc (115).

## Patentansprüche

1. Verfahren zum Reinigen einer optischen Austrittsfläche (302, 303) eines Brechungselementes (206) eines optischen Nahfeld-Abtastgerätes (100) zum Abtasten einer optischen Platte (115), wobei das Verfahren Folgendes umfasst:
- einen Kontaktierungsschritt, der umfasst, dass das Brechungselement (206) und ein Reinigungspad (116) in mechanischen Kontakt gebracht werden, so dass die optische Austrittsfläche des Brechungselementes (206) nicht parallel zu einer Oberfläche des Reinigungspads verläuft, wobei das Brechungselement die Kontaktfläche des Reinigungspads entlang einem Kontaktrand berührt;
- einen ersten Reinigungsschritt, der zumindest eine Relativbewegung des Reinigungspads (116) relativ zu dem Brechungselement (206) zumindest entlang einer Reinigungsachse umfasst, **dadurch gekennzeichnet, dass** die Reinigungsachse in der Ebene der Kontaktfläche des Reinigungspads liegt und nahezu senkrecht zu dem Kontaktrand steht.

2. Reinigungsverfahren nach Anspruch 1, **gekennzeichnet durch** Wählen einer Richtung der Relativbewegung entlang der Reinigungsachse, so dass das Brechungselement dem Kontaktrand nacheilt.

3. Reinigungsverfahren nach Anspruch 2, **dadurch gekennzeichnet, dass** das Verfahren weiterhin einen ersten Rotationsschritt umfasst, der dem ersten Reinigungsschritt vorangeht, wobei der erste Rotationsschritt Drehen des Brechungselementes (206) um eine Rotationsachse in der Ebene des Brechungselementes (206) umfasst.

4. Reinigungsverfahren nach Anspruch 3, **dadurch gekennzeichnet, dass** die Rotationsachse parallel zu dem Kontaktrand steht.

5. Reinigungsverfahren nach Anspruch 4, **dadurch gekennzeichnet, dass** der erste Reinigungsschritt weiterhin eine transversale Relativbewegung entlang einer Achse parallel zu dem Kontaktrand umfasst, wobei vorzugsweise die Relativbewegung entlang der Reinigungsachse und die transversale Relativbewegung gleichzeitig ausgeführt werden.

6. Reinigungsverfahren nach den Ansprüchen 3, 4 oder 5, **dadurch gekennzeichnet, dass** es weiterhin Folgendes umfasst:
- einen zweiten Rotationsschritt, der Drehen des Brechungselementes (206) um die Rotationsachse in einer Richtung, die einer Rotationsrichtung in dem ersten Rotationsschritt entgegengesetzt ist, umfasst;
- einen zweiten Reinigungsschritt, der zumindest eine Relativbewegung des Reinigungspads (116) relativ zu dem Brechungselement (206) zumindest in einer Reinigungsrichtung umfasst, wobei die Reinigungsrichtung entlang der Reinigungsachse verläuft, so dass das Brechungselement dem Kontaktrand nacheilt.

7. Reinigungsverfahren nach Anspruch 6, **gekennzeichnet durch** Wiederholen der Sequenz von Schritten einer ersten Rotation, ersten Reinigung, zweiten Rotation, zweiten Reinigung.

8. Reinigungsverfahren nach Anspruch 7, **gekennzeichnet durch** Verkleinern des Rotationswinkels der Drehung des Brechungselementes nach jeder Sequenz von Schritten einer ersten Rotation, ersten Reinigung, zweiten Rotation, zweiten Reinigung.

9. Reinigungsverfahren nach den Ansprüchen 7 oder 8, **dadurch gekennzeichnet, dass** der Reinigungsschritt weiterhin eine Relativbewegung in einer Richtung parallel zu dem Kontaktrand umfasst.

10. Reinigungsverfahren nach einem der vorhergehenden Ansprüche, **dadurch gekennzeichnet, dass** der Kontaktrand so gewählt wird, dass er beim Auslesen von Informationen aus der optischen Platte einer tangentialen Richtung der Bewegung des Brechungselementes (206) relativ zu einer optischen Platte (115) entspricht.

11. Reinigungsverfahren nach Anspruch 7, **dadurch gekennzeichnet, dass** die Rotationsachse, die einer gegebenen Sequenz von Schritten einer ersten Rotation, ersten Reinigung, zweiten Rotation, zweiten Reinigung entspricht, so gewählt wird, dass sie sich von der Rotationsachse anderer Sequenzen unterscheidet.

12. Reinigungsverfahren nach einem der vorhergehenden Ansprüche, **dadurch gekennzeichnet, dass** die Rotation des Brechungselementes (206) von einem Aktuator (209a, 209b) ausgeführt wird, der verwendet wird, um beim Abtasten einer optischen Platte für Linsenkipp- und Fokussteuerung zu sorgen.

13. Reinigungsverfahren nach einem der vorhergehenden Ansprüche, **dadurch gekennzeichnet, dass** das Reinigungspad (116) eine auf Baumwolle basierte Oberfläche hat.

14. Reinigungsverfahren nach einem der vorhergehenden Ansprüche, **dadurch gekennzeichnet, dass** der Rotationswinkel zwischen 1 und 100 mrad liegt.

15. Reinigungsverfahren nach einem der vorhergehenden Ansprüche, **dadurch gekennzeichnet, dass** das Brechungselement eine Festkörper-Immersionslinse (SIL: solid immersion lens) ist.

16. Optisches Nahfeld-Abtastgerät zum Abtasten einer optischen Platte, das Folgendes umfasst:
- eine Vorfeldeinheit (108) zum Erzeugen eines durchgehenden Strahlungsbündels und Detektieren eines reflektierten Strahlungsbündels;
- einen optischen Kopf (105), wobei der optische Kopf ein Brechungselement (206) umfasst, um das durchgehende Strahlungsbündel zu der optischen Platte (115) hin durchzulassen und das reflektierte Strahlungsbündel von der optischen Platte (115) zu der Vorfeldeinheit (108) hin durchzulassen;
- ein Reinigungspad (116);
- erste mechanische Bewegungsmittel (209a, 209b), um das Brechungselement (206) und das Reinigungspad (116) in mechanischen Kontakt zu bringen, so dass eine optische Austrittsfläche des Brechungselementes nicht parallel zu der Kontaktfläche des Reinigungspads verläuft, wobei das Brechungselement die Kontaktfläche des Reinigungspads entlang einem Kontaktrand berührt;
- zweite mechanische Bewegungsmittel (117), um das Reinigungspad (116) relativ zu dem Brechungselement (206) zumindest entlang einer Reinigungsachse relativ zu bewegen, **dadurch gekennzeichnet, dass** die Reinigungsachse in der Ebene der Kontaktfläche des Reinigungspads (116) liegt und nahezu senkrecht zu dem Kontaktrand steht.

17. Optisches Nahfeld-Abtastgerät nach Anspruch 16, **dadurch gekennzeichnet, dass** die zweiten mechanischen Bewegungsmittel (117) ausgebildet sind, das Reinigungspad entlang der Reinigungsachse in einer Richtung relativ zu bewegen, die so gewählt ist, dass das Brechungselement dem Kontaktrand nacheilt.

18. Optisches Nahfeld-Abtastgerät nach Anspruch 17, **dadurch gekennzeichnet, dass** die ersten mechanischen Bewegungsmittel (209a, 209b) ausgebildet sind, das Brechungselement (206) um eine Rotationsachse in einer ersten Richtung in der Ebene des Brechungselementes (206) zu drehen.

19. Optisches Nahfeld-Abtastgerät nach Anspruch 18, **dadurch gekennzeichnet, dass** die Rotationsachse parallel zu dem Kontaktrand steht.

20. Optisches Nahfeld-Abtastgerät nach Anspruch 19, **dadurch gekennzeichnet, dass** die zweiten mechanischen Bewegungsmittel (117) weiterhin ausgebildet sind, das Reinigungspad (116) transversal entlang einer Achse parallel zu dem Kontaktrand zu bewegen, wobei die zweiten mechanischen Bewegungsmittel (117) vorzugsweise ausgebildet sind, die Relativbewegung entlang der Reinigungsachse und die transversale Relativbewegung gleichzeitig auszuführen.

21. Optisches Nahfeld-Abtastgerät nach den Ansprüchen 18, 19 oder 20,
**dadurch gekennzeichnet, dass:**
- die ersten mechanischen Bewegungsmittel (209a, 209b) weiterhin ausgebildet sind, das Brechungselement (206) in einer der ersten Richtung entgegengesetzten Richtung um die Rotationsachse zu drehen; und
- die zweiten mechanischen Bewegungsmittel (117) weiterhin ausgebildet sind, das Reinigungspad (116) relativ zu dem Brechungselement (206) zumindest in einer Reinigungsrichtung zu bewegen, wobei die Reinigungsrichtung entlang der Reinigungsachse verläuft, so dass das Brechungselement (206) dem Kontaktrand nacheilt.

22. Optisches Nahfeld-Abtastgerät nach Anspruch 21, **dadurch gekennzeichnet, dass** die ersten mechanischen Bewegungsmittel (209a, 209b) und die zweiten mechanischen Bewegungsmittel (117) weiterhin ausgebildet sind, eine Sequenz von Bewegungen, die Drehen des Brechungselementes (206) in der ersten Rotationsrichtung, Bewegen des Reinigungspads (116) entlang der Reinigungsrichtung, Drehen des Brechungselementes (206) in der der ersten Rotationsrichtung entgegengesetzten Richtung und Bewegen des Reinigungspads (116) entlang der Reinigungsrichtung umfasst, wiederholt auszuführen.

23. Optisches Nahfeld-Abtastgerät nach Anspruch 22, **dadurch gekennzeichnet, dass** die ersten mechanischen Bewegungsmittel (209a, 209b) weiterhin ausgebildet sind, einen Rotationswinkel der Drehung des Brechungselementes (206) nach dem Ausführen jeder Sequenz von Bewegungen zu verkleinern.

24. Optisches Nahfeld-Abtastgerät nach den Ansprüchen 22 oder 23, **dadurch gekennzeichnet, dass** die zweiten mechanischen Bewegungsmittel (117) weiterhin ausgebildet sind, das Reinigungspad (116) in einer Richtung parallel zu dem Kontaktrand zu bewegen.

25. Optisches Nahfeld-Abtastgerät nach einem der vorhergehenden Ansprüche, **dadurch gekennzeichnet, dass** der Kontaktrand so gewählt ist, dass er beim Auslesen von Informationen aus der optischen Platte (115) einer tangentialen Richtung der Bewegung des Brechungselementes (206) relativ zu einer optischen Platte (115) entspricht.

26. Optisches Nahfeld-Abtastgerät nach Anspruch 22, **dadurch gekennzeichnet, dass** die ersten mechanischen Bewegungsmittel (209a, 209b) und die zweiten mechanischen Bewegungsmittel (117) weiterhin ausgebildet sind, eine Sequenz von Bewegungen auszuführen, die zumindest zwei unterschiedlichen Rotationsachsen entspricht.

27. Optisches Nahfeld-Abtastgerät nach einem der vorhergehenden Ansprüche, **dadurch gekennzeichnet, dass** das erste mechanische Bewegungsmittel (209a, 209b) ein Aktuator ist, der verwendet wird, um beim Abtasten einer optischen Platte (115) für Linsenkipp- und Fokussteuerung zu sorgen.

28. Optisches Nahfeld-Abtastgerät nach einem der vorhergehenden Ansprüche, **dadurch gekennzeichnet, dass** das Reinigungspad (116) eine auf Baumwolle basierte Oberfläche hat.

29. Optisches Nahfeld-Abtastgerät nach einem der vorhergehenden Ansprüche, **dadurch gekennzeichnet, dass** der Rotationswinkel zwischen 1 und 100 mrad liegt.

30. Optisches Nahfeld-Abtastgerät nach einem der vorhergehenden Ansprüche, **dadurch gekennzeichnet, dass** das Brechungselement (206) das Brechungselement eine Festkörper-Immersionslinse (SIL) ist.

31. Optisches Nahfeld-Abtastgerät zum Abtasten einer optischen Platte, wobei die optische Platte ein Reinigungspad umfasst, mit:
- einer Vorfeldeinheit zum Erzeugen eines durchgehenden Strahlungsbündels und Detektieren eines reflektierten Strahlungsbündels;
- einem optischen Kopf, wobei der optische Kopf ein Brechungselement umfasst, um das durchgehende Strahlungsbündel zu der optischen Platte hin durchzulassen und das reflektierte Strahlungsbündel von der optischen Platte zu der Vorfeldeinheit hin durchzulassen;
- ersten mechanischen Bewegungsmitteln, um das Brechungselement und ein auf der optischen Platte vorgesehenes Reinigungspad in mechanischen Kontakt zu bringen, so dass eine optische Austrittsfläche des Brechungselementes nicht parallel zu der Kontaktfläche des Reinigungspads verläuft, wobei das Brechungselement die Kontaktfläche des Reinigungspads entlang einem Kontaktrand berührt;
- zweiten mechanischen Bewegungsmittel, um das auf der optischen Platte vorgesehene Reinigungspad relativ zu dem Brechungselement zumindest entlang einer Reinigungsachse relativ zu bewegen, wobei das Gerät **dadurch gekennzeichnet ist, dass** die Reinigungsachse in der Ebene der Kontaktfläche des Reinigungspads liegt und nahezu senkrecht zu dem Kontaktrand steht.

32. Optisches Nahfeld-Abtastgerät nach Anspruch 31, **dadurch gekennzeichnet, dass** zweite mechanische Bewegungsmittel Plattenrotationsmittel sind.

33. Optische Platte mit einem Reinigungspad (116), um mit einem optischen Nahfeld-Abtastgerät nach Anspruch 31 beim Ausführen eines Reinigungsverfahrens nach Anspruch 1 zusammenzuarbeiten.

34. Optische Platte nach Anspruch 33, **dadurch gekennzeichnet, dass** das Reinigungspad (116) ein im inneren Gebiet der optischen Platte (115) angebrachter ringförmiger Reinigungsstreifen ist.

## Revendications

1. Procédé de nettoyage d'une face de sortie optique (302, 303) d'un élément de réfraction (206) d'un appareil de balayage optique en champ proche (100) pour balayer un disque optique (115), le procédé comprenant :
- une étape de contact, comprenant la mise en contact mécanique de l'élément de réfraction (206) et d'un tampon de nettoyage (116) de sorte que la face de sortie optique de l'élément de réfraction (206) soit non parallèle à une surface du tampon de nettoyage, l'élément de réfraction venant en contact avec la surface de contact du tampon de nettoyage le long d'un bord de contact;
- une première étape de nettoyage, comprenant au moins un déplacement relatif du tampon de nettoyage (116) par rapport à l'élément de réfraction (206) au moins sur un axe de nettoyage, **caractérisé en ce que** l'axe de nettoyage se trouve dans le plan de la surface de contact du tampon de nettoyage et sensiblement perpendiculaire au bord de contact.

2. Procédé de nettoyage suivant la revendication 1, **caractérisé par** le choix d'une direction du déplacement relatif sur l'axe de nettoyage de sorte que le bord de contact vienne après l'élément de réfraction.

3. Procédé de nettoyage suivant la revendication 2, **caractérisé en ce que** le procédé comprend en outre une première étape de rotation précédant la première étape de nettoyage, la première étape de rotation comprenant la rotation de l'élément de réfraction (206) autour d'un axe de rotation dans le plan de l'élément de réfraction (206).

4. Procédé de nettoyage suivant la revendication 3, **caractérisé en ce que** l'axe de rotation est parallèle au bord de contact.

5. Procédé de nettoyage suivant la revendication 4, **caractérisé en ce que** la première étape de nettoyage comprend en outre un déplacement relatif transversal sur un axe parallèle au bord de contact, le déplacement relatif sur l'axe de nettoyage et le déplacement relatif transversal étant de préférence exécutés simultanément.

6. Procédé de nettoyage suivant la revendication 3, 4 ou 5, **caractérisé en ce que** le procédé comprend en outre :
- une deuxième étape de rotation, comprenant la rotation de l'élément de réfraction (206) autour de l'axe de rotation dans une direction opposée à une direction de rotation dans la première étape de rotation;
- une deuxième étape de nettoyage, comprenant au moins un déplacement relatif du tampon de nettoyage (116) par rapport à l'élément de réfraction (206) au moins dans une direction de nettoyage, la direction de nettoyage étant sur l'axe de nettoyage de sorte que le bord de contact vienne après l'élément de réfraction.

7. Procédé de nettoyage suivant la revendication 6, **caractérisé par** la répétition de la suite de la première étape de rotation, de la première étape de nettoyage, de la deuxième étape de rotation et de la deuxième étape de nettoyage.

8. Procédé de nettoyage suivant la revendication 7, **caractérisé par** la réduction de l'angle de rotation de la rotation de l'élément de réfraction après chaque suite de la première étape de rotation, de la première étape de nettoyage, de la deuxième étape de rotation et de la deuxième étape de nettoyage.

9. Procédé de nettoyage suivant la revendication 7 ou 8, **caractérisé en ce que** l'étape de nettoyage comprend en outre un déplacement relatif dans une direction parallèle au bord de contact.

10. Procédé de nettoyage suivant l'une quelconque des revendications précédentes, **caractérisé en ce que** le bord de contact est choisi de sorte qu'il corresponde à une direction tangentielle de déplacement de l'élément de réfraction (206) par rapport à un disque optique (115) lors de l'extraction d'informations du disque optique.

11. Procédé de nettoyage suivant la revendication 7, **caractérisé en ce que** l'axe de rotation correspondant à une suite donnée de la première étape de rotation, de la première étape de nettoyage, de la deuxième étape de rotation et de la deuxième étape de nettoyage est choisi différent de l'axe de rotation d'autres suites.

12. Procédé de nettoyage suivant l'une quelconque des revendications précédentes, **caractérisé en ce que** la rotation de l'élément de réfraction (206) est exécutée par un actionneur (209a, 209b) utilisé pour permettre la commande de l'inclinaison et de la focalisation de la lentille pendant le balayage d'un disque optique.

13. Procédé de nettoyage suivant l'une quelconque des revendications précédentes, **caractérisé en ce que** le tampon de nettoyage (116) comporte une surface en coton.

14. Procédé de nettoyage suivant l'une quelconque des revendications précédentes, **caractérisé en ce que** l'angle de rotation est compris entre 1 et 100 mrad.

15. Procédé de nettoyage suivant l'une quelconque des revendications précédentes, **caractérisé en ce que** l'élément de réfraction est une SIL (Solid Immersion Lens/lentille à immersion solide).

16. Appareil de balayage optique en champ proche pour balayer un disque optique comprenant :
- une unité frontale (108) pour générer un faisceau de rayonnement avant et détecter un faisceau de rayonnement réfléchi;
- une tête optique (105), la tête optique comprenant un élément de réfraction (206) pour transmettre le faisceau de rayonnement avant vers le disque optique (115) et transmettre le faisceau de rayonnement réfléchi depuis le disque optique (115) vers l'unité frontale (108);
- un tampon de nettoyage (116);
- des premiers moyens de déplacement mécanique (209a, 209b) pour mettre en contact mécanique l'élément de réfraction (206) et le tampon de nettoyage (116) de sorte qu'une surface de sortie optique de l'élément de réfraction soit non parallèle à la surface de contact du tampon de nettoyage, l'élément de réfraction venant en contact avec la surface de contact du tampon de nettoyage le long d'un bord de contact;
- des deuxièmes moyens de déplacement mécanique (117) pour déplacer relativement le tampon de nettoyage (116) par rapport à l'élément de réfraction (206) au moins sur un axe de nettoyage, **caractérisé en ce que** l'axe de nettoyage se trouve dans le plan de la surface de contact du tampon de nettoyage (116) et sensiblement perpendiculaire au bord de contact.

17. Appareil de balayage optique en champ proche suivant la revendication 16, **caractérisé en ce que** les deuxièmes moyens de déplacement mécanique (117) sont à même de déplacer relativement le tampon de nettoyage sur l'axe de nettoyage dans une direction choisie de manière à ce que le bord de contact vienne après l'élément de réfraction.

18. Appareil de balayage optique en champ proche suivant la revendication 17, **caractérisé en ce que** les premiers moyens de déplacement mécanique (209a, 209b) sont à même de faire tourner l'élément de réfraction (206) autour d'un axe de rotation dans une première direction dans le plan de l'élément de réfraction (206).

19. Appareil de balayage optique en champ proche suivant la revendication 18, **caractérisé en ce que** l'axe de rotation est parallèle au bord de contact.

20. Appareil de balayage optique en champ proche suivant la revendication 19, **caractérisé en ce que** les deuxièmes moyens de déplacement mécanique (117) sont en outre à même de déplacer transversalement le tampon de nettoyage (116) sur un axe parallèle au bord de contact, les deuxièmes moyens de déplacement mécanique (117) étant de préférence à même d'exécuter simultanément le déplacement relatif sur l'axe de nettoyage et le déplacement relatif transversal.

21. Appareil de balayage optique en champ proche suivant la revendication 18, 19 ou 20, **caractérisé en ce que :**
- les premiers moyens de déplacement mécanique (209a, 209b) sont en outre à même de faire tourner l'élément de réfraction (206) autour de l'axe de rotation dans une direction opposée à la première direction, et
- les deuxièmes moyens de déplacement mécanique (117) sont en outre à même de déplacer le tampon de nettoyage (116) par rapport à l'élément de réfraction (206) au moins dans une direction de nettoyage, la direction de nettoyage se trouvant sur l'axe de nettoyage de sorte que le bord de contact vienne après l'élément de réfraction (206).

22. Appareil de balayage optique en champ proche suivant la revendication 21, **caractérisé en ce que** les premiers moyens de déplacement mécanique (209a, 209b) et les deuxièmes moyens de déplacement mécanique (117) sont en outre à même d'exécuter de manière répétée une suite de déplacements comprenant la rotation de l'élément de réfraction (206) dans la première direction de rotation, le déplacement du tampon de nettoyage (116) dans la direction de nettoyage, la rotation de l'élément de réfraction (206) dans la direction opposée à la première direction de rotation et le déplacement du tampon de nettoyage (116) dans la direction de nettoyage.

23. Appareil de balayage optique en champ proche suivant la revendication 22, **caractérisé en ce que** les premiers moyens de déplacement mécanique (209a, 209b) sont en outre à même de réduire un angle de rotation de la rotation de l'élément de réfraction (206) après l'exécution de chaque suite de déplacements.

24. Appareil de balayage optique en champ proche suivant la revendication 22 ou 23, **caractérisé en ce que** les deuxièmes moyens de déplacement mécanique (117) sont en outre à même de déplacer le tampon de nettoyage (116) dans une direction parallèle au bord de contact.

25. Appareil de balayage optique en champ proche suivant l'une quelconque des revendications précédentes, **caractérisé en ce que** le bord de contact est choisi de sorte qu'il corresponde à une direction tangentielle de déplacement de l'élément de réfraction (206) par rapport à un disque optique (115) lors de l'extraction d'informations du disque optique (115).

26. Appareil de balayage optique en champ proche suivant la revendication 22, **caractérisé en ce que** les premiers moyens de déplacement mécanique (209a, 209b) et les deuxièmes moyens de déplacement mécanique (117) sont en outre à même d'exécuter une suite de déplacements correspondant à au moins deux axes de rotation différents.

27. Appareil de balayage optique en champ proche suivant l'une quelconque des revendications précédentes, **caractérisé en ce que** les premiers moyens de déplacement mécanique (209a, 209b) sont un actionneur utilisé pour permettre la commande de l'inclinaison et de la focalisation de la lentille pendant le balayage d'un disque optique (115).

28. Appareil de balayage optique en champ proche suivant l'une quelconque des revendications précédentes, **caractérisé en ce que** le tampon de nettoyage comporte une surface en coton.

29. Appareil de balayage optique en champ proche suivant l'une quelconque des revendications précédentes, **caractérisé en ce que** l'angle de rotation est compris entre 1 et 100 mrad.

30. Appareil de balayage optique en champ proche suivant l'une quelconque des revendications précédentes, **caractérisé en ce que** l'élément de réfraction (206) est une SIL (Solid Immersion Lens/lentille à immersion solide).

31. Appareil de balayage optique en champ proche pour balayer un disque optique, le disque optique comprenant un tampon de nettoyage, comprenant :
- une unité frontale pour générer un faisceau de rayonnement avant et détecter un faisceau de rayonnement réfléchi;
- une tête optique, la tête optique comprenant un élément de réfraction pour transmettre le faisceau de rayonnement avant vers le disque optique et transmettre le faisceau de rayonnement réfléchi depuis le disque optique vers l'unité frontale;
- des premiers moyens de déplacement mécanique pour mettre en contact mécanique l'élément de réfraction et un tampon de nettoyage monté sur le disque optique de sorte qu'une surface de sortie optique de l'élément de réfraction soit non parallèle à la surface de contact du tampon de nettoyage, l'élément de réfraction venant en contact avec la surface de contact du tampon de nettoyage le long d'un bord de contact;
- des deuxièmes moyens de déplacement mécanique pour déplacer relativement le tampon de nettoyage monté sur le disque optique par rapport à l'élément de réfraction au moins sur un axe de nettoyage, l'appareil étant **caractérisé en ce que** l'axe de nettoyage se trouve dans le plan de la surface de contact du tampon de nettoyage et sensiblement perpendiculaire au bord de contact.

32. Appareil de balayage optique en champ proche suivant la revendication 31, **caractérisé en ce que** les deuxièmes moyens de déplacement mécanique sont des moyens de rotation de disque.

33. Disque optique comprenant un tampon de nettoyage (116) pour coopérer avec un appareil de balayage optique en champ proche suivant la revendication 31 pour exécuter un procédé de nettoyage suivant la revendication 1.

34. Disque optique suivant la revendication 33, **caractérisé en ce que** le tampon de nettoyage (116) est une bande de nettoyage de forme annulaire montée dans la zone interne du disque optique (115).
